Europäisches Patentamt

European Patent Office

Office européen des brevets

(11) Publication number: **0 154 229**
**B1**

## (12) EUROPEAN PATENT SPECIFICATION

(45) Date of publication of patent specification: **03.05.89**

(51) Int. Cl.⁴: **G 21 C 3/10**

(21) Application number: **85101650.1**

(22) Date of filing: **15.02.85**

(54) Improved fuel rod assembly for a nuclear reactor.

(30) Priority: **27.02.84 US 584229**

(43) Date of publication of application:
**11.09.85 Bulletin 85/37**

(45) Publication of the grant of the patent:
**03.05.89 Bulletin 89/18**

(84) Designated Contracting States:
**BE DE FR GB IT SE**

(56) References cited:
**DE-B-1 238 589**
**FR-A-2 305 827**
**FR-A-2 548 434**
**US-A-4 003 788**

(73) Proprietor: **WESTINGHOUSE ELECTRIC CORPORATION**
**Westinghouse Building Gateway Center**
**Pittsburgh Pennsylvania 15222 (US)**

(72) Inventor: **Bucher, George David**
**8139 Post Road**
**Allison Park Pennsylvania 15101 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to fuel assemblies for nuclear reactors and, more particularly, to a nuclear fuel rod having an improved end plug for sealing a pressurized gas within the fuel rod.

As is well known in the art, the overall efficiency of a nuclear reactor can be increased and the useful life of its fuel rods prolonged if the fuel rods are internally pressurized. The concept of pressurized fuel rods is set forth in U.S. Patent No. 3,677,894, granted to Harry M. Ferrari, which discloses a fuel rod having a thermally decomposable body located therewithin which, when heated, generates a gas to internally pressurize the fuel rod.

Another manner of pressurizing fuel rods is during fabrication thereof wherein one of its end plugs is provided with an inlet gas orifice which is subsequently welded closed after the fuel rod has been filled with an inert-gas under pressure. One type of such an end plug can be seen in U.S. Patent No. 4,075,454, granted to Duncan et al. The Duncan et al. end plug has a radially extending gas inlet orifice which leads into a central machined-out area of the plug (cavity) for direct flow communication with the inside of the fuel rod. After the fuel rod is filled with a pressurized gas, the inlet orifice is sealed closed with a weld puddle as the end plug is welded on the end of the fuel rod. Besides the costly machining of the central cavity in the plug, it is very difficult to seal the inlet orifice due to peel-back problems. Additionally, such seal requires a time-consuming and expensive inspection operation to insure that the seal is proper. Another type of end plug can be seen in German Patent No. 1,238,589 which shows a flat on the reduced diameter portion of the end plug for rod pressurization followed by a girth seal weld. Still another end plug, similar in construction and operation to the end plus in the German patent, has a reduced diameter portion provided with four small, circumferentially spaced, longitudinally extending grooves that extend the full axial height of the plug's reduced diameter portion. An end plug which has a "pressurization" flat or grooves extending the entire length of its reduced diameter is very difficult to seal by girth welding since there is no complete metal-to-metal contact of the end plug with the end of the fuel tube, what with the "flat" or "grooves" defining a void which prevents proper heat dissipation during the welding operation and thus results in melting back ("peel back") of the tube wall.

Still another, and one of the most common end plug constructions used for pressurizing a fuel rod during the fabrication stage, can be seen in Boyko et al. U.S. Patent No. 4,003,788 which shows an end plug provided with a small axial bore. In such an arrangement, the end plug is first hermetically sealed by girth welds on the end of the tubular cladding, the rod is then placed in a pressurized weld chamber where the gas under pressure enters into the rod through the axial bore, and then the bore opening is fused closed, such as, for example, by one or another of the methods described in U.S. Patents Nos. 3,683,148; 3,725,635; and 3,842,238. The method generally used for closing this gas inlet opening (passageway) in the end of the plug is the well known TIG (Tungsten Inert-Gas) process wherein the opening is sealed by a short duration (approximately 2 seconds) weld pulse that produces a fusion weld across the opening. During this welding operation, the molten material is propelled into the passageway by the arc "blast" to produce a nugget sealing the end and extending into the passageway, often as a series of droplets. It is very difficult to ensure that what appears as adequate penetration is indeed a weld of high integrity fused to the wall of the passageway. Inspection of the seal weld by non-destructive means is difficult and time consuming, and the expensive state of the art inspection devices required are of marginal reliability and effectiveness. Additionally, the close proximity of the electrode and the turbulence produced by the arc create a demonstrated potential for the weld to become contaminated with diffused tungsten.

It is the principal object of the invention to alleviate the aforesaid problems, and the invention, from one aspect thereof, accordingly resides in a nuclear fuel rod assembly comprising a cladding tube for receiving nuclear fuel and a pressurized gas, and means for sealingly closing the ends of the cladding tube containing the nuclear fuel and pressurized gas, at least the closing means associaed with one of said ends comprising an end plug which has a body portion adapted to be inserted into an end portion of the cladding tube, characterized in that said body portion has a cross-sectional configuration and size such as to fit into said end portion of the cladding tube in force-fitting relationship and surface-to-surface sealing contact therewith, and that said body portion has, on the outer periphery thereof, a reduced surface portion in the form of a flat extending from the inner end of the body portion to a location spaced from the outer end thereof, said reduced surface portion, together with an adjacent wall portion of the cladding tube, defining a gas inlet orifice and gas passage for pressurizing the cladding tube when said body portion is inserted in said end portion of the tube only partially, said end portion, through said surface-to-surface sealing contact, sealing said gas inlet orifice when said body portion is in its' fully inserted position.

From another aspect thereof, the invention resides in a method of pressurizing and sealing a nuclear fuel rod assembly as defined above, which method is characterized by the steps of partially inserting said body portion of the end plug into said end portion of the cladding tube, introducing gas under pressure into the cladding tube through said gas inlet orifice, completely inserting the body portion into said end portion of the cladding tube, thereby to seal said gas inlet orifice, and seal-welding the end plug to the cladding tube.

In a preferred embodiment still to be described herein in detail, the end plug has a shoulder portion formed integral with the body portion and adjacent thereto, which shoulder portion is larger in cross-section than the body portion so as to define a ledge which abuts the adjacent end of the cladding tube to form a butt-joint between the tube and the end plug when the body portion is fully inserted in said end portion of the cladding tube. The gas-passage-defining means of the end plug is shown in the preferred embodiment as a reduced peripheral-surface portion, namely, a flat, on the body portion which extends longitudinally from the inner end of the latter to said location spaced from the outer end thereof, the terms "inner" and "outer", as used herein, referring to the relative disposition of the ends with respect to each other within the tube.

It will be appreciated from the above that the nuclear fuel rod assembly embodying the invention has no pressurizing bore or the like that needs to be welded or fused closed, the gas inlet orifice provided by the gas-passage-defining means being automatically sealed upon full insertion of the partially inserted body portion into the cladding tube. Moreover, and since the gas-passage-defining means is coextensive only with an inner part of the body portion, thus leaving the peripheral surface of the remaining our outer part of the body portion smooth and uninterrupted, the outer part will make substantially total surface-to-surface contact with the cladding tube when the end plug is fully inserted therein, thereby improving the conduction of heat away from the butt-joint during welding and, thus, alleviating the above-mentioned peel-back problem previously encountered.

The preferred embodiment of the invention will now be described, by way of example only, with reference to the accompanying drawings, in which:

Figure 1 is a partially sectioned, elevational view (with parts broken away for clarity) of a conventional nuclear fuel assembly with which fuel rod assemblies embodying the invention can be employed;

Figure 2 is an enlarged sectional view of a fuel rod assembly embodying the invention;

Figure 3 is a sectional view of a prior-art end plug having an axial passageway for admitting a pressurized gas into the fuel rod;

Figure 4 is an enlarged elevational view of the upper end plug of the fuel rod shown in Figure 2, with the end plug rotated ninety degrees from its position seen in Figure 2 so as to show a frontal view of the flat;

Figure 5 is a sectional view as taken along line V—V of Figure 4;

Figure 6 is a sectional view, as taken along line VI—VI of Figure 4, showing the end plug partially inserted into the upper end of the fuel tube; and

Figure 7 is a view similar to Figure 6 but with the lower body portion of the end plug shown totally inserted into the end of the tube and with the upper shoulder portion shown in abutment with the end of the tube.

In the following description, like reference characters designate like or corresponding parts throughout the several views, and terms such as "forward", "rearward", "left", "right", "upwardly", "downwardly", and the like are used as words of convenience not to be construed as limiting terms.

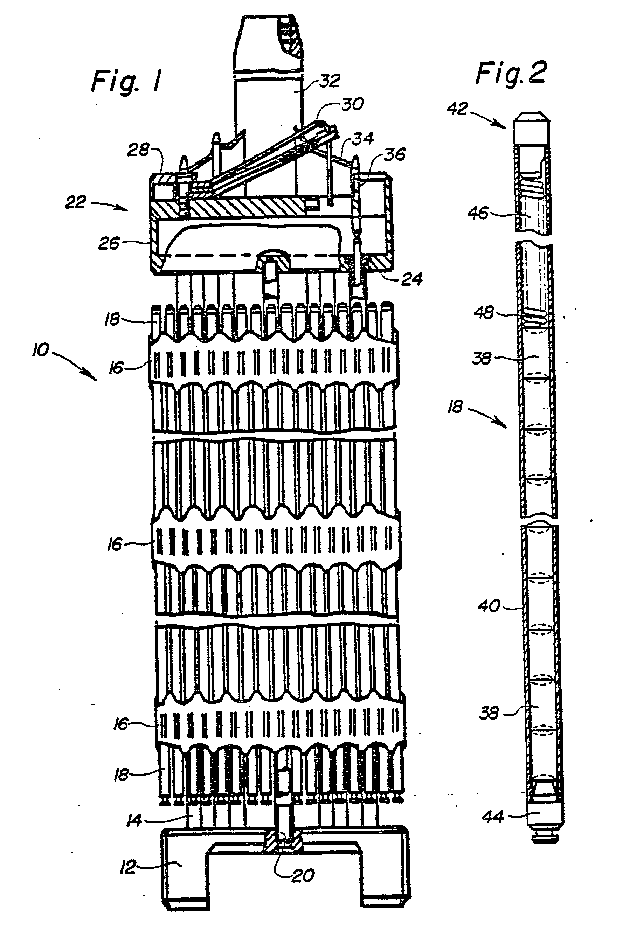

Referring now to the drawings, and particularly to Figure 1, the assembly shown therein and designated generally with the numeral 10 basically comprises a lower end structure or bottom nozzle 12 for supporting the assembly on the lower core plate (not shown) in the core region of a reactor (not shown); a number of control-rod guide tubes or thimbles 14 longitudinally extending upward from the bottom nozzle 12; a plurality of transverse grids 16 axially spaced along the guide thimbles 14; an organized array of elongate fuel rods, such as fuel rod 18, transversely spaced from one another and supported by the grids 16; an instrumentation tube 20 located in the center of the assembly; and an upper end structure or top nozzle generally designated with numeral 22 and which is attached to the upper ends of the guide thimbles 14 to form an integral assembly capable of being conventionally handled without damaging the assembly components.

The top nozzle 22 includes a transversely extending adapter plate 24 having sidewalls 26 extending upward from the peripheral edges thereof and defining an enclosure or housing. Suitably clamped to an annular upper flange 28 on the sidewalls 26 are leaf springs 30 (only one is shown in Figure 1) which cooperate with the upper core plate (not shown) in a conventional manner to prevent hydraulic lifting of the fuel assembly during upward coolant flow while allowing for changes in fuel assembly length due to thermal expansion and the like. Disposed within the opening defined by the annular flange 28 is a conventional rod cluster assembly 32 having radially extending flukes 34 which are connected to the upper ends of the control rods 36 to permit the control rods to be moved up and down in the control rod guide thimbles 14 in a well-known manner.

The fuel assembly 10 depicted in the drawings is of a type having a square array of fuel rods 18 in which the control-rod guide thimbles are strategically arranged. To form the fuel assembly 10, the transverse grids 16 are attached to the guide thimbles 14 at predetermined axially spaced locations; the fuel rods 18 are inserted through the grids 16; the lower nozzle 12 is suitably attached to the lower ends of the guide thimbles 14; and then the top nozzle 22 is attached to the upper ends of the guide thimbles 14 in a conventional manner. The fuel assembly 10 illustrated in Figure 1 is conventional and is shown herein merely as representative of a type of fuel assembly with which a fuel rod 18 (hereinafter referred to as a fuel rod assembly) embodying the invention can be employed.

- As best seen from Figure 2, the fuel rod assembly 18 includes a plurality of cylindrical nuclear fuel pellets 38, such as $UO_2$ enriched with U-235, disposed end to end within a tubular cladding member or fuel tube 40. The fuel tube 40 is an elongate thin-walled tube made preferably of a zirconium alloy. The opposite ends of the fuel tube 40 are closed by upper and lower end plugs, preferably formed of the same material as the fuel tube, to seal the nuclear fuel as well as an inert gas under pressure within the fuel tube. The upper end plug, generally indicated by numeral 42, embodies the invention and will be discussed in detail later herein. The lower end plug 44 is of conventional construction, being secured in place by a girth weld or the like. A plenum chamber 46 is provided within the fuel tube 40 between one end of the stack of fuel pellets 38 and the adjacent end plug, such as the upper end plug 42. A helical spring 48 disposed within the plenum chamber 46 between the pellets 38 and the upper end plug 42 functions to hold the pellets 38 compactly in place against the lower end plug 44.

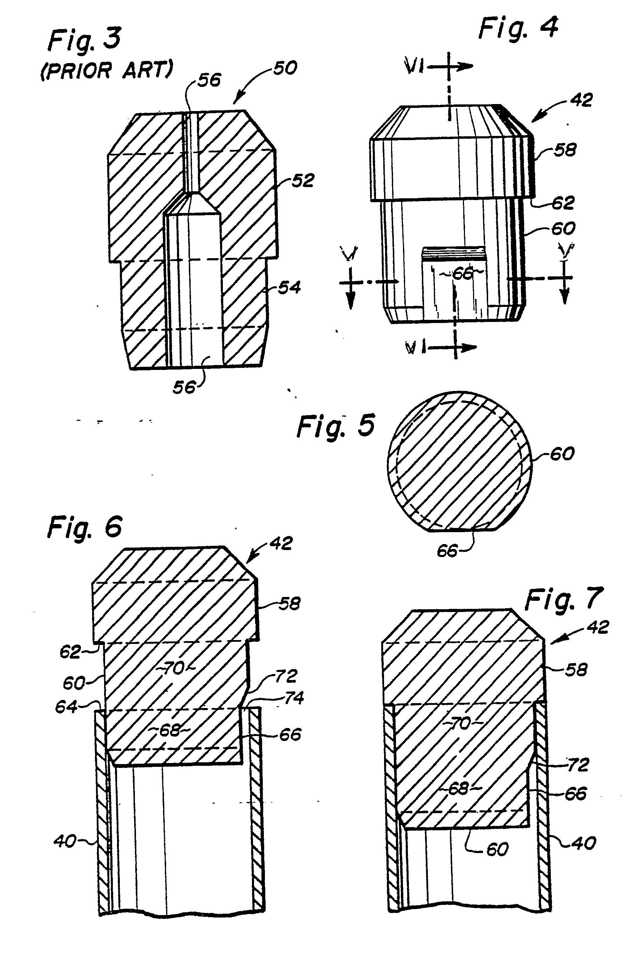

As stated earlier herein, the fuel rod assembly 18 is internally pressurized. The manner in which an inert-gas under pressure is introduced into the fuel tube 40 is determined by the novel design and configuration of the upper end plug 42; however, before discussing the end plug 42, it is believed that a clearer understanding and better appreciation of its advantageous features can be derived from a quick review of a prior-art end plug, such as end plug 50 shown in Figure 3. This conventional end plug 50 is of the type disclosed in the above-mentioned U.S. Patent No. 4,003,788. Basically, it comprises an upper body portion 52, a lower body portion 54 of a reduced diameter, and an axial bore 56 extending through the upper and lower body portions to provide flow communication from the interior to the exterior of a fuel rod. When in use, the lower body portion 54 is press-fitted into the end of a fuel tube (not shown) and a girth weld seals the butt-joint so as to secure the end plug to the end of the fuel tube. In a pressurized weld chamber, an inert-gas is injected into the fuel tube through the axial bore 56, and then the end of the bore is sealed by welding.

As seen from Figures 4—7, the end plug 42 embodying the invention does not have any axial bore extending therethrough. More specifically, the end plug 42 is of an integral construction including an upper shoulder or head portion 58 having a diameter greater than the inner diameter of the fuel tube 40, and a lower cylindrical body portion 60 having a diameter less than the diameter of the upper shoulder portion 58 and slightly larger than the inner diameter of tube 40 so as to enable the body portion to be inserted into the end of the fuel tube 40 in a press-fit or force-fitting relationship. In the preferred embodiment shown, the diameter of the shoulder portion 58 is substantially equal to the outer diameter of tube 40, and the difference between the diameters of the shoulder portion and the lower body portion 60 is approximately equal to the wall thickness of the fuel tube 40, the arrangement being such that, when the plug 42 is pressed into the upper end portion of the fuel tube 40, the ledge 62 defined by the lower edge of the shoulder portion 58 forms a butt-joint with the top edge 64 of the tube 40.

The lower body portion 60 of end plug 42 is provided with a flat 66, preferably formed by removing a segment from the cylindrical body portion (see Figure 5). The flat 66 begins at the lower edge of the body portion 60 and extends therefrom upward to the approximate mid-section of the lower body portion. For reference, the section of the lower body portion 60 containing the flat 66 will be referred to herein as the inner part 68, whereas the remaining section of the lower body portion, i.e., the section between the flat and the upper shoulder portion 58, will be referred to as the outer part 70. In the preferred embodiment, the horizontal chord length of the flat 66 is approximately equal to the radius of the lower portion 60, and the axial height of the flat (and thus of the inner part 68) is approximately equal to one-half the axial height of the lower portion 60, both of these dimensions being merely a design choice and not critical to the invention. Furthermore, the inner part 68 and the outer part 70 of the lower body portion 60 preferably have an equal, generally constant diameter. As best seen from Figures 6 and 7, the transition surface 72 extending between the upper edge of the flat 66 and the adjacent lower edge of the outer part 70 is slanted, preferably at an inclined angle of approximately twenty-five degrees from vertical.

Now, the manner of assembling the fuel rod assembly 18 will be briefly described with particular reference to Figures 2, 6 and 7. The lower end plug 44 is welded to the lower end of the fuel tube 40, the fuel pellets 38 are placed into the fuel tube, the helical spring 46 is placed on top of the stack of fuel pellets, and then the upper end plug 42 is pressed (force-fitted) partially into the upper end of the fuel tube 40 to an axial position such that only the inner part 68 ox the lower body portion 60 is within the fuel tube 40 and the flat 66 thereon defines an outwardly open gap 74 between the inner wall of the fuel tube 40 and the lower body portion 60 of the plug 42, the gap 74 providing a gas inlet orifice for introducing an inert-gas into the tube 40. The fuel rod assembly 18, together with its partially inserted end plug 42, is placed into a pressurized weld chamber where the tube is pressurized with an inert-gas entering the tube through the gap 74, and then the end plug 42 is completely inserted so that the gap 74 is eliminated and metal-to-metal sealing contact is established between the outer part 70 of lower body portion 60 and the inner wall of tube 40, as shown in Figure 7. In such fully seated position, the butt-joint formed between the lower edge 62 of the upper shoulder portion 58 and upper edge 64 of the tube 40 is hermetically sealed by welding.

## Claims

1. A nuclear fuel rod assembly comprising a cladding tube for receiving nuclear fuel and a pressurized gas, and means for sealingly closing the ends of the cladding tube containing the nuclear fuel and pressurized gas, at least the closing means associated with one of said ends comprising an end plug which has a body portion adapted to be inserted into an end portion of the cladding tube, characterized in that said body portion (60) has a cross-sectional configuration and size such as to fit into said end portion of the cladding tube (40) in force-fitting relationship and surface-to-surface sealing contact therewith, and that said body portion (60) has, on the outer periphery thereof, a reduced surface portion (66) in the form of a flat extending from the inner end of the body portion to a location spaced from the outer end thereof, said reduced surface portion (66), together with an adjacent wall portion of the cladding tube (40), defining a gas inlet orifice (74) and gas passage for pressurizing the cladding tube when said body portion is inserted in said end portion of the tube only partially, said end portion, through said surface-to-surface sealing contact, sealing said gas inlet orifice when said body portion is in its fully inserted position.

2. A nuclear fuel rod assembly according to claim 1, characterized in that said end plug (42) includes a shoulder portion (58) formed adjacent said body portion (60) and integral therewith, said shoulder portion (58) being larger in cross-section than said body portion so as to define a ledge (62) which abuts the adjacent end (64) of the cladding tube (40), and thereby forms a butt-joint between the latter and the end plug, when said body portion is fully inserted in said end portion of the cladding tube.

3. A nuclear fuel rod assembly according to claim 2, characterized in that said butt-joint is hermetically sealed with a weld.

4. A nuclear fuel rod assembly according to claim 2 or 3, characterized in that said shoulder portion (58) has a diameter substantially equal to the outer diameter of the cladding tube (40).

5. A nuclear fuel rod assembly according to any one of the preceding claims, characterized in that said body portion (60) is substantially cylindrical and of substantially constant diameter throughout its axial extent.

6. A nuclear fuel rod assembly according to any one of the preceding claims, characterized in that said body portion (60) has an inner part (68) and an outer part (70), said flat (66) being disposed on said inner part (68) and extending thereon longitudinally from the inner end of the latter to an inclined transition surface (72) between the flat (66) and said outer part (70).

7. A nuclear fuel rod assembly according to any one of the preceding claims, characterized in that said end plug (42) and said cladding tube (40) are formed of an alloy of zirconium.

8. A method of pressurizing and sealing a nuclear fuel rod assembly as claimed in any of the preceding claims, characterized by the steps of partially inserting said body portion (60) of the end plug (42) into said end portion of the cladding tube (40), introducing gas under pressure into the cladding tube through said gas inlet orifice (74), completely inserting said body portion (60) into said end portion of the cladding tube, thereby to seal said gas inlet orifice (74) and seal-welding the end plug to the cladding tube.

## Patentansprüche

1. Kernbrennstab mit einem Hüllrohr zur Aufnahme von Kernbrennstoff und einem unter Druck stehenden Gas, und mit Mitteln zum dichten Abschließen der Enden des den Kernbrennstoff und das unter Druck stehende Gas enthaltenden Hüllrohrs, wobei mindestens die dem einen der Enden zugeordneten Verschlußmittel eine Endkappe mit einem in den Hüllrohrendbereich einsetzbaren Stopfenteil aufweisen, dadurch gekennzeichnet, daß der Stopfenteil (60) eine solche Querschnittskonfiguration und Größe aufweist, daß er mit Preßsitz und abdichtender Oberfläche-Oberfläche-Berührung in dem Endabschnitt des Hüllrohrs (40) sitzt, und daß der Stopfenteil (60) an seinem Außenumfang einer zurückgesetzten Oberflächenbereich (66) in Form einer vom inneren Ende des Stopfenteils zu einer mit Abstand von dessen äußerem Ende gelegenen Stelle verlaufenden Abflachung aufweist, der zusammen mit einem angrenzenden Wandbereich des Hüllrohrs (40) eine Gaseinlaßöffnung (74) und einen Gaskanal zur Druckbeaufschlagung des Hüllrohrs bei nur teilweise in den Endabschnitt des Hüllrohrs eingesetztem Stopfenteil bildet, wobei der Endabschnitt bei in voll eingesetzter Position befindlichen Stopfenteil aufgrund der dichtenden Oberfläche-Oberfläche-Berührung die Gaseinlaßöffnung verschließt.

2. Kernbrennstab nach Anspruch 1, dadurch gekenzeichnet, daß die Endkappe (42) eine an den Stopfenteil (60) angrenzende und damit einstückige Schulter (58) aufweist, die im Querschnitt größer als der Stopfenteil ist und einen Bund (62) bildet, der am angrenzenden Ende (64) des Hüllrohrs (40) anliegt und dadurch eine Stoßverbindung zwischen Hüllrohr und Endkappe bei vollständig in den Hüllrohrendabschnitt eingesetztem Stopfenteil bildet.

3. Kernbrenstab nach Anspruch 2, dadurch gekennzeichnet, daß die Stoßverbindung mittels einer Schweißnaht gasdicht verschlossen ist.

4. Kernbrennstab nach Anspruch 2 oder 3, dadurch gekennzeichnet, daß die Schulter (58) einem dem Außendurchmesser des Hüllrohrs (40) im wesentlichen gleichen Durchmesser hat.

5. Kernbrennstab nach einem der vorhergehenden Ansprüche, dadurch gekennzeichnet, daß der Stopfenteil (60) im wesentlichen zylindrisch ist und über seine ganze axiale Länge einen im wesentlichen gleichbleibenden Durchmesser hat.

6. Kernbrennstab nach einem der vorhergehenden Ansprüche, dadurch gekennzeichnet, daß der Stopfenteil (60) einen inneren Abschnitt (68) und einen äußeren Abschnitt (70) hat und die Abflachung (66) an dem inneren Abschnitt (68) gebildet ist und von dessen inneren Ende zu einer schrägen Übergangsfläche (72) zwischen der Abflachung (66) und dem äußeren Abschnitt (70) verläuft.

7. Kernbrennstab nach einem der vorhergehenden Ansprüche, dadurch gekennzeichnet, daß die Endkappe (42) und das Hüllrohr (40) aus einer Zirkoniumlegierung hergestellt sind.

8. Verfahren zur Druckbeaufschlagung und zum Verschließen eines Kernbrennstabs nach einem der vorhergehenden Ansprüche, gekennzeichnet durch die Schritte des teilweisen Einführens des Stopfenteils (60) der Endkappe (42) in den Endabschnitt des Hüllrohrs (40), des Einleitens von Gas unter Druck in das Hüllrohr durch die Gaseinlaßöffnung (74), des vollständigen Einführens des Stopfenteils (60) in den Endabschnitt des Hüllrohrs zum Verschließen der Gaseinlaßöffnung (74), und des dichtenden Verschweißens der Endkappe mit dem Hüllrohr.

**Revendications**

1. Assemblage de barres de combustible nucléaire, comprenant un tube de gainage pour recevoir du combustible nucléaire et un gas sous pression, et un moyen pour fermer de façon étanche les extrémités du tube de gainage contenant le combustible nucléaire et le gaz sous pression, au moins le moyen de fermeture associée à l'une desdites extrémités comprenant un bouchon d'extrémité possédant une portion de corps adaptée à être insérée dans une portion d'extrémité du tube de gainage, caractérisé en ce que ladite portion de corps (60) possède une configuration en section et une taille telles qu'elle s'ajuste dans ladite portion d'extrémité du tube de gainage (40) par emmanchement à force et en contact d'étanchéité surface contre surface avec cette portion, et que ladite portion de corps (60) possède sur sa périphérie extérieure une portion (66) de surface en retrait sous forme d'un méplat s'étendant à partir de l'extrémité intérieure de la portion de corps jusqu'à un endroit espacé de son extrémité extérieure, ladite portion (66) de surface en retrait définissant avec une portion de paroi adjacente du tube de gainage (40) un orifice (74) d'admission de gaz et un passage de gaz pour mettre sous pression le tube de gainage lorsque ladite portion de corps n'est insérée qu'en partie dans ladite portion d'extrémité du tube, ladite portion d'extrémité fermant de façon étanche, par ledit contact d'étanchéité surface contre surface, ledit orifice d'admission de gaz, lorsque ladite portion de corps se trouve dans sa position complètement insérée.

2. Assemblage de barres de combustible nucléaire selon la revendication 1, caractérisée en ce que ledit bouchon (42) d'extrémité comprend une portion d'épaulement (58) réalisée de façon adjacente à ladite portion de corps (60) et formant une seule pièce avec celle-ci, ladite portion d'épaulement (58) ayant une section transversale supérieure à celle de la portion de corps, de manière à définir un rebord (62) qui bute contre l'extrémité (64) adjacente du tube de gainage (40) et forme ainsi une jonction bout à bout entre ce dernier et le bouchon d'extrémité, lorsque ladite portion de corps est complètement insérée dans ladite portion d'extrémité du tube de gainage.

3. Assemblage de barres de combustible nucléaire selon la revendication 2, caractérisé en ce que ladite jonction bout à bout est rendue étanche par une soudure.

4. Assemblage de barres de combustible nucléaire selon la revendication 2 ou 3, caractérisé en ce que le diamètre de ladite portion d'épaulement (58) est sensiblement égal au diamètre extérieur du tube de gainage (40).

5. Assemblage de barres de combustible nucléaire selon l'une quelconque des revendications précédentes, caractérisé en ce que ladite portion de corps (60) est sensiblement cylindrique et possède un diamètre sensiblement constant sur toute sa longueur axiale.

6. Assemblage de barres de combustible nucléaire selon l'une quelconque des revendications précédentes, caractérisé en ce que ladite portion de corps (60) a une partie intérieure (68) et une partie extérieure (70), ledit méplat (66) étant disposé su ladite partie intérieure (68) et s'étendant sur cette partie dans le sens longitudinal à partir de son extrémité intérieure jusqu'à une surface oblique (72) de transition entre le méplat et ladite partie extérieure (70).

7. Assemblage de barres de combustible nucléaire selon l'une quelconque des revendications précédentes, caractérisé en ce que ledit bouchon (42) d'extrémité et ledit tube de gainage (40) sont en alliage de zirconium.

8. Procédé de mise sous pression et de fermeture étanche d'un assemblage de barres de combustible nucléaire selon l'une quelconque des revendications précédentes, caractérisé par les étapes d'insertion partielle de ladite portion de corps (60) du bouchon (42) d'extrémité dans ladite portion d'extrémité du tube de gainage (40), l'introduction du gaz sous pression dans le tube de gainage à travers ledit orifice (74) d'admission de gaz, l'insertion complète de ladite portion de corps (60) dans ladite portion d'extrémité du tube de gainage, pour fermer ainsi de façon étanche ledit orifice (74) d'admission de gaz, et la soudage étanche du bouchon extrémité au tube de gainage.

Fig. 1

Fig. 2

*Fig. 3*
(PRIOR ART)

56    50

52

54

56

*Fig. 4*

VI

42

58

62

V    V

66

VI

*Fig. 5*

60

66

*Fig. 6*

42

58

62
60
64

70

72
74

68    66

40

*Fig. 7*

42

58

70

72

68    66

60    40

2